# EUROPEAN PATENT APPLICATION

(11) **EP 4 592 040 A1**
(43) Date of publication of application: **30.07.2025**
(21) Application number: 24154465.9
(22) Date of filing: 29.01.2024
(51) Int. Cl.: B25J 9/16, G06T 7/73

(54) **SYSTEM AND METHOD FOR PICK POSE ESTIMATION FOR ROBOTIC PICKING WITH ARBITRARILY SIZED END EFFECTORS**

(71) Applicant: Siemens Aktiengesellschaft, 80333 München (DE)
(72) Inventor: UGALDE DIAZ, Ines, Redwood City, CA, 94061 (US); ERDOGAN, Husnu Melih, Berkeley, CA, 94703 (US); SOLOWJOW, Eugen, Berkeley, CA, 94709 (US); ZHU, Brian, Emeryville, CA, 94608 (US); COELHO, Kyle, Emeryville, CA, 94608 (US); BATSII, Paul Andreas, 83233 Bernau a. Chiemsee (DE); SCHÜTTE, Christopher, 90461 Nürnberg (DE)
(74) Representative: HKW Intellectual Property PartG mbB

(57) **Abstract**

A methodology for estimating a pick pose for an arbitrarily sized robotic end effector. The end effector is modeled as a 2D shape with specified dimensions indicative of its footprint on an object being picked. A pick point is first estimated on an object mask of a selected object, produced by performing instance segmentation on one or more input images of a scene. A pick surface is determined utilizing neighboring points around the pick point in the object mask. A set of points in the object mask, which define an extent of the pick surface, are reprojected with respect to a normal of the pick surface, to create a planar representation of the pick surface. A yaw-oriented pick pose is computed based on alignment of a longer dimension of the end effector model with a longer dimension of the planar representation of the pick surface.

## Description

### TECHNICAL FIELD

The present disclosure relates generally to robotics in industrial automation tasks, and in particular, to systems and methods for pick pose estimation for execution of robotic picking with arbitrarily sized end effectors.

### BACKGROUND

The fourth industrial revolution aims to drive mass customization to the cost of mass production. This can be enabled by autonomous machines that no longer have to be programmed with detailed instructions, such as way points or manually taught paths, but automatically define their tasks using design information of the product to be produced. Robotic bin picking is one such skill that enables autonomous machines. Traditional robotic picking relies on a teach-based approach, such that operators can predefine the robot poses for pick and drop positions. In the last decade, advances in computer vision and deep learning have enabled flexible robotic bin picking, where pre-teaching pick and drop positions is no longer required. Camera systems, such as RGB-D cameras, collect both color pictures and depth maps or point-clouds of bins with objects in random configurations. The camera input is then transferred to computer vision algorithms or deep neural networks that have been trained to compute grasping locations or "pick points" on said input. These methodologies have been proven to work reliably well even without any prior information about the object geometry and color (no CAD data is needed).

Often, it is required for a robotic end effector to have a relatively large (oblong) footprint of contact with the object, which make them suitable for picking objects of certain sizes and/or textures. In such cases, it may be desirable to estimate an optimal pick pose for the end effector to achieve maximum robustness of pick.

### SUMMARY

Aspects of this disclosure provide methods and systems for estimating a yaw-oriented pick pose for arbitrarily sized end effectors for executing robotic picking of objects.

A first aspect of this disclosure provides a method for robotic picking of objects. The method comprises acquiring, via an imaging system, one or more images of a scene, the scene including one or more objects. The method further comprises estimating, by a computing system comprising one or more processors, a pick point on an object mask, the object mask being produced by performing instance segmentation based on the one or more images. The object mask corresponds to an object, from the one or more objects, selected to be picked by an end effector or a robot. The method further comprises estimating, by the computing system, a pick pose for the end effector, wherein the end effector is modeled as a 2D shape with specified dimensions. The pick pose estimation comprises: determining a pick surface utilizing neighboring points around the pick point in the object mask; reprojecting a set of points in the object mask, which define an extent of the pick surface, with respect to a normal of the pick surface, to create a planar representation of the pick surface; and computing a yaw-orientation based on alignment of a longer dimension of the end effector model with a longer dimension of the planar representation of the pick surface. The method further comprises outputting, by the computing system, the estimated pick pose to a controller configured to control the end effector to pick the selected object.

Further aspects of this disclosure provide autonomous systems and computer program products embodying the above-described method.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

### BRIEF DESCRIPTION OF THE DRAWINGS

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.
FIG. 1 illustrates an autonomous system for robotic picking according to one or more embodiments.
FIG. 2A and FIG. 2B illustrate example configurations of robotic end effectors suitable for implementing aspects of the disclosure.
FIG. 3 is a high-level block diagram illustrating a computer-implemented workflow for estimating a pick pose according to one or more embodiments.
FIG. 4 is a flowchart illustrating a process executed by a pick point estimator to determine a yaw-oriented pick pose according to one or more embodiments.
FIG. 5 illustrates generation of a planar representation of a pick surface from a point cloud and alignment of an end effector model therewith.
FIG. 6 illustrates a computing system that can support execution of robotic picking using arbitrarily sized end effectors according to disclosed embodiments.

### DETAILED DESCRIPTION

Various technologies are described herein that are directed to robotic picking applications using arbitrarily sized end effectors that may have an oblong footprint of contact with the object to be picked. For example, an end effector can include an array of gripping elements (such as suction cups, magnetic grippers, etc.), which may define a rectangular footprint. In other examples, the end effector may be defined by a single gripping element with an oblong footprint (e.g., rectangular, oval, elliptical shapes, among others). The dimensions of the end effector may be configurable based on the use-case. In such cases, a pick point, which is parameterized simply by its (X, Y, Z) coordinates and its normal vector may not be sufficient. In order to achieve a highly robust pick, it is important that the end effector makes the most contact with the object's surface. To ensure this, it is desirable to estimate a pick pose which is further characterized by a yaw-orientation. The yaw-orientation may define an angular orientation of the end effector in the plane of the pick surface.

If an object's 3D model is known beforehand, this problem is somewhat straightforward. A traditional computer vision algorithm or ad-hoc-trained neural network can be used to perform object pose estimation. Once the object's pose is known, the pick pose can be derived such that the end effector's axes are aligned with the object's axes. If the object's 3D model is unknown, an object-agnostic instance segmentation model can be used to estimate object segmentation masks. A heuristic may be used to derive the pick pose by aligning rectangular shapes (i.e., the end-effector's shape) to the object segmentation mask. However, the segmentation mask may include surfaces other than the picking surface, and in turn may produce suboptimal pick poses. This technique can be further error prone, particularly when the objects lie in aberrant positions or in very chaotic/occluded scenes.

The present disclosure addresses one or more of the described-herein shortcomings by providing methods and systems that leverage pick points and instance segmentation masks in combination with 3D point cloud manipulation and 2D image processing to derive yaw-oriented pick poses for arbitrarily sized end effectors.

According to the disclosed methodology, the end effector is modeled as a 2D shape with specified dimensions, which may represent its footprint on an object being picked. The end effector dimensions may define an input to the herein described computer-implemented workflow. In this workflow, a pick point is estimated on a three-dimensional segmentation mask (referred to herein as "object mask") of an object selected to be picked. The object mask is produced by performing instance segmentation based on one or more acquired images of a scene that includes one or more objects. The object mask may include, for example, a point cloud representation of the selected object. A pick surface is then determined utilizing neighboring points around the pick point in the object mask. The pick surface may represent a contact surface of the selected object with the end effector. Next, a set of points in the object mask, which define an extent of the pick surface, are reprojected with respect to a normal of the pick surface, to create a planar representation of the pick surface. The planar representation produced in this manner may be free from camera perspective warping. Subsequently, a yaw-oriented pick pose is computed based on alignment of a longer dimension of the end effector model with a longer dimension of the planar representation of the pick surface. The yaw-orientation may represent the rotation angle applied to the end effector to align its longer dimension with that of the pick surface of the selected object. The estimated pick pose is outputted to a controller configured to control the end effector to pick the selected object.

According to disclosed embodiments, the pick pose outputted to the controller may be defined by a set of parameters, including: position coordinates defining a center of the end effector determined based on the alignment of the end effector model, a normal vector of the pick surface and the yaw-orientation defining an angular orientation of the end effector in the plane of the pick surface. For example, in one embodiment, the outputted pick pose may explicitly specify the above parameters. In another embodiment, the outputted pick pose may specify a six degree-of-freedom (6D) pose computed based on the above parameters using known transformations.

Unlike the approaches described above, the disclosed methodology does not rely on deep learning methods that require large amounts of training data and/or prior knowledge of the object's 3D model, and furthermore provides a higher degree of accuracy even for chaotic or aberrant arrangement of objects in the scene. Also, by reprojecting the 3D object mask cloud into a 2D image containing the planar representation of the pick surface, the computational cost is significantly reduced (e.g., by enabling image processing via basic 2D computer vision operations), making the solution suitable for high-throughput real-time applications.

Aspects of the disclosed methodology may be embodied as software executable by a processor. In some embodiments, aspects of the disclosed methodology may be suitably integrated into commercial artificial intelligence (AI)-based automation software products, such as SIMATIC Robot Pick AI^{™} developed by Siemens AG, among others.

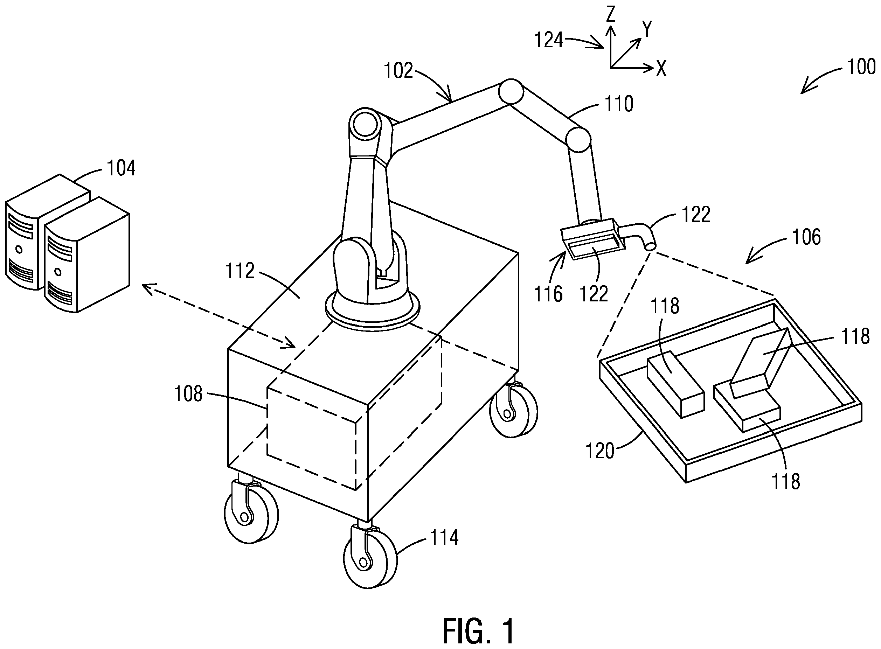

Turning now to the drawings, FIG. 1 illustrates an autonomous system 100 for robotic picking according to one or more embodiments. The autonomous system 100 may be implemented, for example, in a factory setting. In contrast to conventional automation, autonomy gives each asset on the factory floor the decision-making and self-controlling abilities to act independently in the event of local issues. The autonomous system 100 comprises one or more robots, such as the robot 102, which can be controlled by computing system 104 to execute one or more industrial tasks within a physical environment 106. Examples of industrial tasks include assembly, transport, or the like.

The computing system 104 may comprise an industrial PC, or any other computing device, such as a desktop or a laptop, or an embedded system, among others. The computing system 104 can include one or more processors configured to process information and/or control various operations associated with the robot 102. In particular, the one or more processors may be configured to execute an application program, such as an engineering tool, for operating the robot 102.

To realize autonomy of the system 100, in one embodiment, the application program may be designed to operate the robot 102 to perform a task in a skill-based programming environment. In contrast to conventional automation, where an engineer is usually involved in programming an entire task from start to finish, typically utilizing low-level code to generate individual commands, in an autonomous system as described herein, a physical device, such as the robot 102, is programmed at a higher level of abstraction using skills instead of individual commands. The skills are derived for higher-level abstract behaviors centered on how the physical environment is to be modified by the programmed physical device. Illustrative examples of skills include a skill to grasp or pick up an object, a skill to place an object, a skill to open a door, a skill to detect an object, and so on.

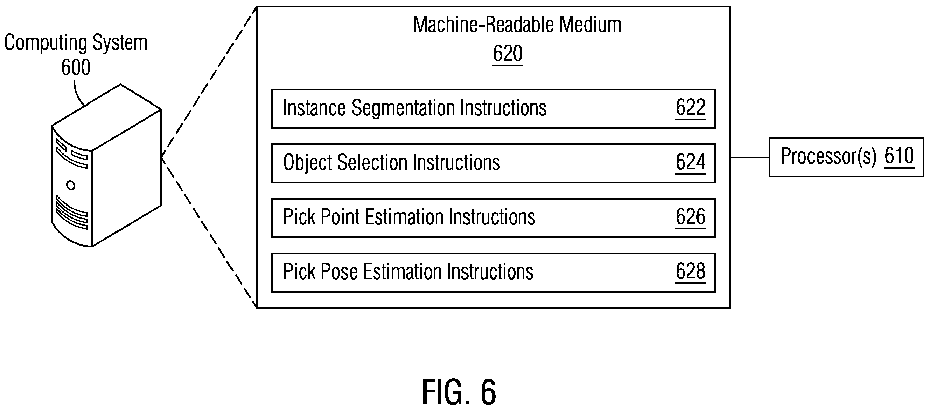

The application program may generate controller code that defines a task at a high level, for example, using skill functions as described above, which may be deployed to a robot controller 108. From the high-level controller code, the robot controller 108 may generate low-level control signals for one or more motors for controlling the movement of the robot 102, such as angular position of the robot arms, swivel angle of the robot base, and so on, to execute the specified task. In other embodiments, the controller code generated by the application program may be deployed to intermediate control equipment, such as programmable logic controllers (PLC), which may then generate low-level control commands for the robot 102 to be controlled. Additionally, the application program may be configured to directly integrate sensor data from physical environment 106 in which the robot 102 operates. To this end, the computing system 104 may comprise a network interface to facilitate transfer of live data between the application program and the physical environment 106. An example of a computing system suitable for the present application is described hereinafter in connection with FIG. 6.

Still referring to FIG. 1, the robot 102 can include a robotic arm or manipulator 110 and a base 112 configured to support the robotic manipulator 110. The base 112 can include wheels 114 or can otherwise be configured to move within the physical environment 106. The robot 102 can further include an end effector 116 attached to the robotic manipulator 110. The end effector 116 can include one or more gripping elements 122 configured to grasp (hold) and pick up an object 118. Examples of gripping elements include a vacuum-based gripper ("suction cup"), a magnetic gripper, among others. The one or more gripping elements 122 may be configured such that the end effector 116 has an oblong footprint of contact with an object 118 to be picked. The object 118 to be picked may be placed in a bin 120 with other objects 118. The robotic manipulator 110 can be configured to move so as to change the position of the end effector 116, for example, so as to pick and move objects 118 within the physical environment 106.

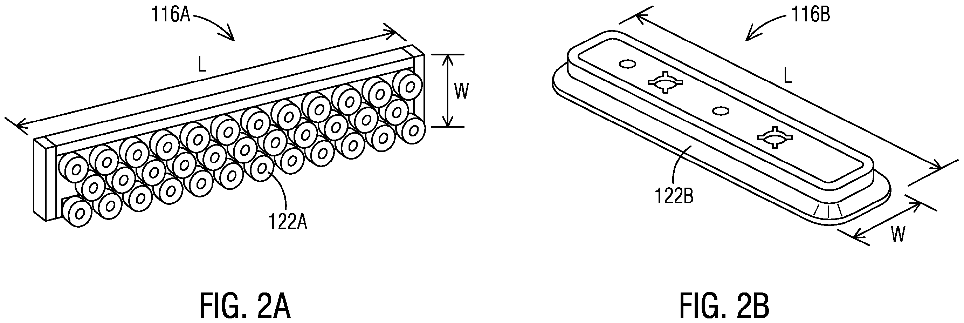

FIG. 2A illustrates a first example embodiment of an end effector 116A. The end effector 116A includes an array of gripping elements 122A. Each gripping element 122A is a suction cup in this case. In the shown embodiment, the gripping elements 122A are identical to each other, each having a cylindrical shape defining a circular contact area. In other embodiments, the array may be formed by non-identical gripping elements or gripping elements having other shapes. The array of gripping elements 122A defines a rectangular footprint of the end effector 116A with a specified length (L) and width (W). FIG. 2B illustrates a second example embodiment of an end effector 116B. The end effector 116B includes a single (relatively large) gripping element 122B. The gripping element 122B is a suction cup in this case. The griping element 122B defines an oblong contact area. In the shown embodiment, the gripping element 122B has a rectangular shape with a specified length (L) and width (W) that defines the footprint of the end effector 116B. In other embodiments, the single gripping element 122B may a different shape, such as elliptical, oval, or any other oblong shape. The dimensions (e.g., length and width) of each type of end effector 116A, 116B may be configurable depending on the use-case.

Continuing with reference to FIG. 1, a robotic picking operation may involve grasping objects 118, in a singulated manner, from the bin 120, by the robotic manipulator 110, using the end effector 116. The objects 118 may be arranged in arbitrary poses within the bin 120. The objects 118 can be of assorted types or of the same type. The physical environment 106, which includes the objects 118 placed in the bin 120, is perceived via an imaging system, which may include at least one camera 122. As shown, the camera 122 may, for example, be mounted to the end effector 116. The imaging system, including the camera 122, may be used to acquire one or more images of the scene, which may be provided as an input to a computing system, such as the computing system 104, for estimating a pick pose for the end effector 116. The estimated pick pose may be outputted to a controller, such as the robot controller 108, to control the end effector 116 to pick a selected object 118. For example, as described above, the pick pose may be output as high-level controller code to the controller, which may therefrom generate low-level commands to control movement of the end effector 116.

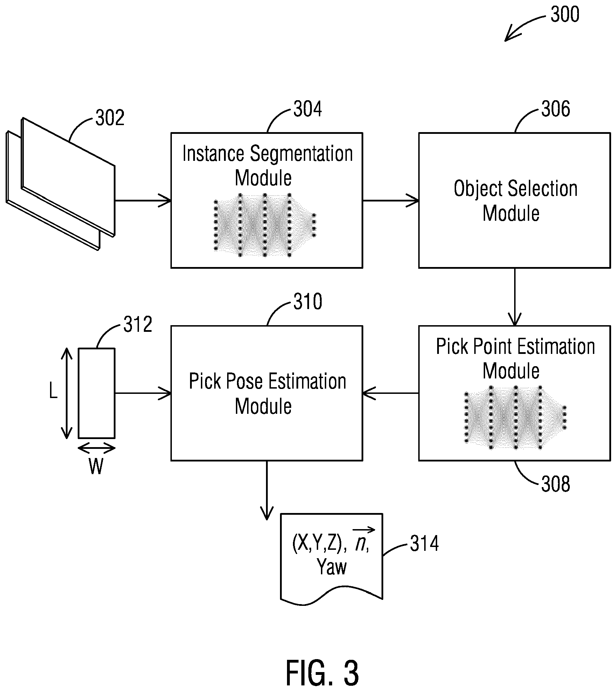

FIG. 3 illustrates a computer-implemented workflow 300 for estimating a pick pose according to one or more disclosed embodiments. The various modules, such as the instance segmentation module 304, the object selection module 306, the pick point estimation module 308 and the pick pose estimation module 310, described herein, including components thereof, may be implemented by a computing system in various ways, for example, as hardware and programming. The programming for the modules 304, 306, 308, 310 may take the form of processor-executable instructions stored on non-transitory machine-readable storage mediums and the hardware may include processors to execute those instructions. For example, the programs may run on an industrial PC or on a smaller device (e.g., a controller) of an autonomous system. Furthermore, the processing capability may be distributed among multiple system components, such as among multiple processors and memories, optionally including multiple distributed processing systems or cloud/network elements.

Referring to FIG. 3, the disclosed methodology includes acquiring one or more images 302 of a scene via an imaging system. In one embodiment, the one or more images 302 may include a color intensity image and a depth image of the scene. A color intensity image includes a two-dimensional representation of image pixels, where each pixel includes intensity values for a number of color components. An example of a color intensity image is a RGB color image, which is an image including pixel intensity information in red, green and blue color channels. A depth image, also referred to as a depth map, includes a two-dimensional representation of image pixels that contains, for each pixel, a depth value. The depth values correspond to the distance of the surfaces of scene objects from a camera viewpoint. The color intensity image and the depth image may be aligned pixel-wise. For example, in some embodiments, a single RGB-D camera can be configured to acquire an image of the scene with RGB color and depth channels.

In another embodiment, the one or more images 302 may comprise a point cloud of the scene. A point cloud may include a set of points in a 3D coordinate system that represent a 3D surface or multiple 3D surfaces, where each point position is defined by its Cartesian coordinates in a real-world reference frame 124 (see FIG. 1), and further by intensity values of color components (e.g., red, green and blue). The acquired point cloud 302 can thus include a colorized 3D representation of all surfaces in the scene. The point cloud 302 may be acquired, for example, via a RGB-D camera.

The one or more images 302, along with the camera intrinsic parameters may define an input to the workflow 300. Camera intrinsic parameters are parameters that allow a mapping between pixel coordinates in the 2D image frame and 3D coordinates in the real-world reference frame 124. Typically, the camera intrinsic parameters include the coordinates of the principal point or optical center, and the focal length along orthogonal axes. A point cloud can be converted into respective color intensity and depth images, and vice versa, by applying a sequence of transforms based on the camera intrinsic parameters.

In a first step, an instance segmentation module 304 performs instance segmentation based on the one or more images 302, to detect objects in the scene and therefrom compute respective object masks. Instance segmentation essentially includes semantic segmentation and object detection with the added feature of identification of boundaries of the objects at the detailed pixel level. Given an input color intensity image, an instance segmentation model, such as a trained convolutional neural network, may be used to compute an instance segmentation mask corresponding to each object detected in the scene. Examples of instance segmentation models that can be used or adapted for the present purpose include instance segmentation using: "Segment Anything Model" (SAM) developed by Meta AI, "You Look Only Once" (YOLO) model, Mask Recurrent Convolutional Neural Network (Mask R-CNN), among others. Each instance segmentation mask computed by the model may include a flat (2D) mask comprising a set of pixels that denote a particular object. The flat instance segmentation masks may be used to segment the pixel-wise aligned depth map of the scene, to produce a 3D object mask for each object in the scene. In one embodiment, the 3D object mask may include a point cloud representation of the particular object, derived from the segmented depth map using the camera intrinsic parameters as described above.

Next, an object selection module 306 may be used to select an object for picking from the list of object masks. The object selection is desirably performed such that the object being picked is isolated (not occluded). This way, the chances for pick success can be maximized, by minimizing object friction forces. At the same time, the topmost objects are not accidentally pulled outside of the bin. Based on the above objective, a pickability measure may be determined for each of the object masks, which can be used to make a selection of the object to be picked. For example, the pickability measure may include a pickability score for each object mask, or a binary label (pickable or not pickable) for each object mask, or a rank of the object masks, or any combination thereof.

In one embodiment, a heuristic may be used to determine the pickability measures of the object masks. In most cases, the object to be picked is desirably the topmost object, which is usually not occluded. To uncover the topmost object, the depth of the object (e.g., derived from the depth map) may provide the strongest signal. The heuristic may, accordingly, include a depth measure of the object mask. The depth measure may include, for example, the average or the maximum or the minimum depth values of pixels in the mask, or any combination thereof. Also, it may often be desirable to get larger objects out of the way sooner than later. Accordingly, the heuristic may also include a size measure of the object mask. The size measure may be defined, for example, by an area covered by all the pixels of the object mask. In one embodiment, the heuristic may include a combination (e.g., a weighted combination) of the depth measure of the object mask, the size of the object mask and the confidence of the predicted object mask, to determine a pickability measure of each object mask. The result of the object selection module 306 may be one object mask, a list of ranked object masks or a list of individually labeled object masks with binary labels (pickable or not pickable). Having a list may allow to immediately calculate pick points for a number of objects, which may be beneficial for parallelization jobs or in cases where the top-ranked object is deemed unpickable due to safety or robot workspace constraints.

In an alternate embodiment, a trained neural network or other machine learning model may be used to determine the pickability measures of the object masks. The neural network/machine learning model may likewise provide an output including binary labels for each mask (pickable or not pickable) or an ordered list of object masks from most pickable to least pickable.

Next, a pick point estimation module 308 estimates a pick point on the object mask of the selected object. In one embodiment, the pick point estimation module 308 may comprise a grasp neural network to compute a grasp location for the end effector to pick up the selected object. Grasp neural networks are often convolutional, such that the networks can label each pixel of an input image with some type of grasp affordance metric, referred to as grasp score. The input image typically includes a depth map. The grasp score of a pixel is indicative of a quality of grasp at the location defined by the pixel, which typically represents a confidence level for carrying out a successful grasp (e.g., without dropping the object). Based on the pixel-wise grasp scores, an optimal grasping location for the end effector may be determined based on defined constraints (e.g., avoiding collision with a bin wall). A grasp neural network may be trained on a dataset comprising depth maps of objects or scenes from a variety of camera positions and ground truth labels that include pixel-wise grasp scores for a given type of gripper of the end effector. A non-limiting example of a grasp neural network suitable for the present purpose is disclosed in the International Patent Application No. PCT/US2023/013550, filed by the present Applicant, which is incorporated herein by reference in its entirety.

According to a disclosed embodiment herein, the end effector may comprise an array of identical gripping elements, for example, as shown in FIG. 2A. The size (length and width) of the array may be configurable based on the use-case. In this case, the pick point for a single gripping element of the array may be computed using a grasp neural network trained on the specific type of the single gripping element (e.g., cylindrical suction cup). Given a segmented depth map obtained from the input image(s) 302, the trained grasp neural network may be used to determine an optimal grasping location for the single gripping element. The optimal grasping location or pick point computed on the segmented depth map may be projected on to a 3D space of the real-world reference frame 124 using the depth information from the segmented depth map and the camera intrinsic parameters, to locate the pick point on the object mask. The inventive methodology in this embodiment thus leverages the pick point of only a single gripping element of the array for pick pose estimation, making the methodology scalable to any arbitrarily sized array (configurable based on the use-case) without having to train/ re-train the grasp neural network in each case.

In other embodiments, the pick point may be modeled using a key point in the instance segmentation mask. Key point detection can be performed from color intensity images, for example using neural networks, which may be embedded in the instance segmentation model or be a standalone model. Alternatively, non-deep learning methods may be employed to model the pick point. As an example, the centroid of the instance segmentation mask may be used to model the pick point. The key point/ centroid computed on the flat instance segmentation mask may be projected onto a 3D space of the real-world reference frame 124 using the depth information from the segmented depth map and the camera intrinsic parameters, to locate the pick point on the object mask.

Still referring to FIG. 3, the end effector may be modeled as a 2D shape that suitably represents a contact footprint of the end effector. For example, as shown, the end effector model 312 can include a rectangular shape with a specified length (L) and width (W), which may be suitable for describing an end effector including an array of gripping elements. Other oblong end effectors, which may include a single or multiple gripping elements, can also be modeled as rectangles. For instance, an elliptical or oval end effector may be modeled as a rectangle having length and width specified by the major and minor axes respectively. In other embodiments, other 2D shapes be suitably employed to model the end effector. The dimensions of the end effector model 312 define a further input to the workflow 300.

The pick pose estimation module 310 estimates a pick pose for the end effector using as input the object mask determined at 304, the estimated pick point determined at 308 and the specified dimensions (e.g., L, W) of the end effector model 312. As described in detail hereinafter, the pick pose estimation module 310 may perform a sequence of operations based on the above-mentioned inputs to derive a yaw-oriented pick pose 314. The pick pose 314 may be defined by coordinates (*X, Y, Z*) defining a center of the end effector in the real-world reference frame, a normal vector (*̅n̅*̅) of a pick surface of the object and the angular orientation of the end effector in the plane of the pick surface (*Yaw*).

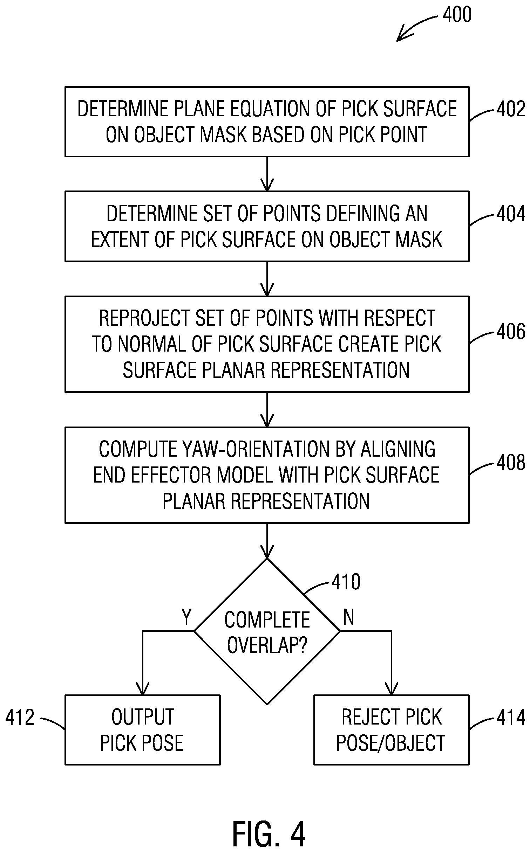

FIG. 4 illustrates a process 400 for determining a yaw-oriented pick pose according to one or more disclosed embodiments. Activity blocks 402-408 of the process 400 may be performed by a computing system including one or more processors. In one embodiment, the activity blocks 402-408 may be performed by the pick pose estimation module 310 of the herein-described computer implemented workflow 300.

Block 402 involves determining a pick surface utilizing neighboring points around the pick point in the object mask. The object mask may include a point cloud representation of the selected object derived from the segmented depth map of the scene. The pick surface may be defined by a plane. A set of neighboring points may be selected around the pick point in the point cloud, to compute a plane equation.

The number or the reach of the neighboring points can be determined depending on the use-case. For example, where the end effector comprises an array of gripping elements, the number or reach of the neighboring points may be determined based on a dimension of a single gripping element. To illustrate, in the example shown in FIG. 2A, the set of neighboring points may be selected such that the maximum distance from the pick point does not exceed the radius of the suction cup 122A. In another embodiment, the number or reach of the neighboring points may be determined based on a minimum dimension (e.g., width W) of the end effector model 312.

Given the set of neighboring points, a plane equation may be determined, for example using a method least squares or other regression methods, that best fits those points. The plane equation may define the pick surface.

Block 404 includes determining a set of points (to be reprojected in a subsequent step) that define an extent of the pick surface on the object mask. Not all points in the object mask necessarily belong to the pick surface. For example, the object may be a tilted box, and several faces of the box may be visible and be part of the object mask. This step aims at finding the limits of the pick surface once the plane equation is determined. In one embodiment, a clustering method based on a heuristic that combines distance to plane, normal classification and other geometric properties may be used for this purpose. The set of points to be reprojected may be obtained by removing all points in the object mask that do not belong to pick surface, e.g., as determined by the clustering method. Furthermore, in order to determine the set of points to be reprojected, it may be expedient to remove outlier points with respect to the plane of the pick surface that contribute to noisy measurements, for example, using statistical outlier filters.

Block 406 includes reprojecting the determined set of points with respect to a normal of the pick surface, to create a planar representation of the pick surface. In one embodiment, the determined set of points in the object mask may first be projected into a depth map. The transformation may be carried out using the camera intrinsic parameters. The points in the depth map may then be rotated with respect to the normal of the pick surface. As a result of the rotation, a 2D image may be produced that has a viewing direction perpendicular to pick surface, i.e., the pick surface is aligned with the camera frame of the 2D image. In this manner, camera perspective warping may be removed.

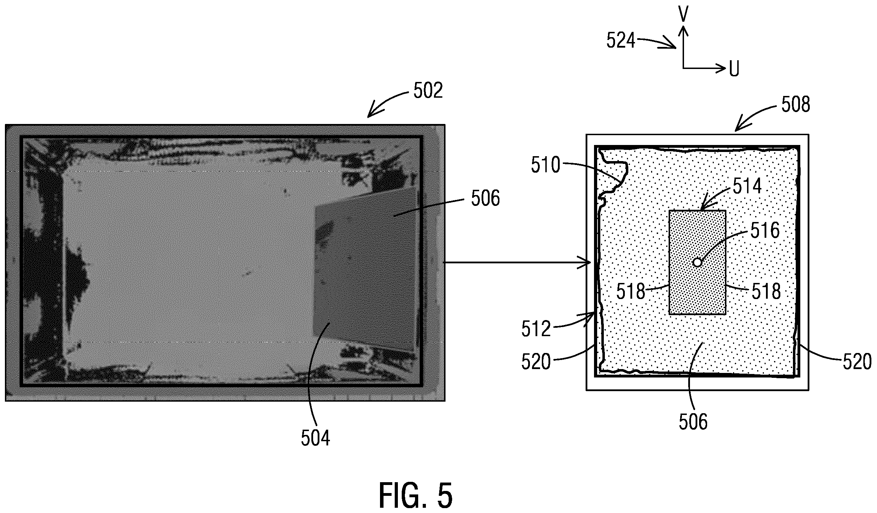

The above-described step may be illustrated referring to FIG 5. Here, the image 502 represents a 2D projection of a point cloud using camera intrinsic parameters. The image 502 depicts a scene including a bin containing a box lying on its right wall. The image 502 is essentially a depth map, which is a 2D representation of 3D points. That is, each point in the image 502, in addition to x and y coordinates, is further characterized by depth information. The reference numeral 504 refers to the set of all points in the pick surface 506 of the selected object (box). The image 508 represents the 2D image resulting from the rotation of the points 504 with respect to the normal of the pick surface 506. The image 508 has a viewing direction perpendicular to the pick surface 506. That is, the plane of the pick surface 506 has been rotated such that it is now aligned with the camera frame of the image 508. As illustrated, the pick surface 506, which appears trapezoidal in the image 502 due to perspective warping, appears generally rectangular in the image 508 after re-projection of the points 504 in the direction of the pick surface normal.

In one embodiment, the planar representation of the pick surface may be created by processing the 2D image to generate a contour representing an outline of the pick surface. The processing of the 2D image may involve any operation(s) to obtain an enhanced image otherwise extract useful information to generate the contour. For example, the contour may be generated from the reprojected points by performing basic 2D computer vision operations, such as infilling, inpainting and opening operations, among others, to recover missing points or gaps. The planar representation of the pick surface may be created by fitting a primitive shape (typically, a rectangle) of minimum area that includes all points in the generated contour. In some embodiments, a primitive shape may be directly fitted on the contour without additional operations to recover missing points or gaps. The planar dimensions of the pick surface may be computed, for example, by measuring the dimensions of the fitted primitive shape.

In the example illustrated in FIG. 5, a contour 510 is generated on the 2D image 508 produced by reprojection of the points 504. As shown, the contour 510 is missing a corner. This may occur, for example, due to faulty depth imaging and/or insufficient points in the point cloud. In this example, the missing corner is recovered by fitting a minimum area rectangle 512 that contains all the points in the contour 510. The rectangle 512 defines the planar representation of the pick surface on the 2D image 508.

With reference again to FIG. 4, block 408 includes computing a yaw-orientation by aligning a longer dimension of the end effector model with a longer dimension of the planar representation of the pick surface. The yaw-orientation defines an angular orientation of the end effector in the plane of the pick surface. In particular, the yaw-orientation may represent the rotation angle applied to the end effector to align its longer dimension with that of the pick surface.

Continuing with the example of FIG. 5, the rectangle 514 represents the end effector model, which is overlaid, for illustration, on the pick surface 506. As shown, the rectangle 514 of the end effector model is centrally aligned with the rectangle 512 of the pick surface planar representation, such that the long sides 518 of the end effector model 514 are aligned with the long sides 520 of the pick surface planar representation 512. Based on the alignment of the end effector model, the yaw-derived pick pose may be computed as follows. The position of the end effector may be computed based on the center 516 of the aligned effector model 514, by transforming the coordinates of 516 from the image reference frame 524 to the real-word reference frame 124. The direction of approach may be determined by computing a normal vector of the pick surface 506 in the real-world reference frame 124. To compute the yaw-orientation, the end effector is assumed to rest in a known initial pose in the real-world reference 124 and consequently in the image reference frame 524. For example, it may be assumed herein that the end effector (represented by the end effector model 514) is resting such that its longer dimension is initially aligned with the U-axis in the image reference frame 524. The yaw-orientation may be determined by the rotation angle applied to the effector model 514 in the image reference frame 524 to align its longer dimension with that of the pick surface planar representation 512. In the portrayed example, the resulting yaw-orientation for the end effector would then yield 90 degrees.

Referring to FIG. 4, at block 410, a determination may be made as to whether there is a complete overlap between the end effector model and the pick surface planar representation. If a complete overlap is determined at block 410, the computed pick pose may be outputted to a controller at block 412. The outputted pick pose may include position coordinates (*X, Y, Z*) defining a center of the end effector in the real-world reference frame, the normal vector (*̅n̅*̅) of the pick surface and the angular orientation of the end effector in the plane of the pick surface (*Yaw*). In some embodiments, the pick pose may be determined as a 6D pose in the real-world reference frame, which may be computed based on the above parameters using known transformations.

If a complete overlap is not determined at block 410, i.e., the end effector is too large for the object, then the pick pose and the object may be rejected at block 414. In this case, control may return to the workflow 300 to select a different object mask and/or the end effector dimensions may be modified.

FIG. 6 shows an example of a computing system 600 that can support execution of robotic picking using arbitrarily sized end effectors according to disclosed embodiments. The computing system 600 may be embodied, for example and without limitation, as an industrial PC with a Linux operating system, for executing real-time control of a robot. The computing system 600 includes at least one processor 610, which may take the form of a single or multiple processors. The processor(s) 610 may include a one or more CPUs, GPUs, microprocessors, or any hardware devices suitable for executing instructions stored on a memory comprising a machine-readable medium. The computing system 600 further includes a machine-readable medium 620. The machine-readable medium 620 may take the form of one or more media including any non-transitory electronic, magnetic, optical, or other physical storage device that stores executable instructions, such as instance segmentation instructions 622, object selection instructions 624, pick point estimation instructions 626 and pick pose estimation instructions 626, as shown in FIG. 6. As such, the machine-readable medium 620 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 600 may execute instructions stored on the machine-readable medium 620 through the processor(s) 610. Executing the instructions (e.g., the instance segmentation instructions 622, the object selection instructions 624, the pick point estimation instructions 626 and the pick pose estimation instructions 626) may cause the computing system 600 to perform any of the technical features described herein, including according to any of the features of the instance segmentation module 304, the object selection module 306, the pick point estimation module 308 and the pick pose estimation module 310, described above.

The systems, methods, devices, and logic described above, including the instance segmentation module 304, the object selection module 306, the pick point estimation module 308 and the pick pose estimation module 310, may be implemented in many different ways in many different combinations of hardware, logic, circuitry, and executable instructions stored on a machine-readable medium. A product, such as a computer program product, may include a storage medium and machine-readable instructions stored on the medium, which when executed in an endpoint, computer system, or other device, cause the device to perform operations according to any of the description above, including according to any features of the instance segmentation module 304, the object selection module 306, the pick point estimation module 308 and the pick pose estimation module 310. Computer readable program instructions described herein can be downloaded to respective computing/processing devices from a computer readable storage medium or to an external computer or external storage device via a network, for example, the Internet, a local area network, a wide area network and/or a wireless network.

The processing capability of the systems, devices, and modules described herein, including the instance segmentation module 304, the object selection module 306, the pick point estimation module 308 and the pick pose estimation module 310 may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

Although this disclosure has been described with reference to particular embodiments, it is to be understood that the embodiments and variations shown and described herein are for illustration purposes only. Modifications to the current design may be implemented by those skilled in the art, without departing from the scope of the patent claims.

## Claims

1. A method for robotic picking of objects, comprising:
acquiring, via an imaging system, one or more images of a scene, the scene including one or more objects,
performing, by a computing system comprising one or more processors:
estimating a pick point on an object mask, the object mask produced by performing instance segmentation based on the one or more images, the object mask corresponding to an object, from the one or more objects, selected to be picked by an end effector of a robot,
estimating a pick pose for the end effector, wherein the end effector is modeled as a 2D shape with specified dimensions, comprising:
determining a pick surface utilizing neighboring points around the pick point in the object mask,
reprojecting a set of points in the object mask, which define an extent of the pick surface, with respect to a normal of the pick surface, to create a planar representation of the pick surface, and
computing a yaw-orientation based on alignment of a longer dimension of the end effector model with a longer dimension of the planar representation of the pick surface, and
outputting the estimated pick pose to a controller configured to control the end effector to pick the selected object.

2. The method according to claim 1, wherein the end effector comprises an array of gripping elements modeled as a rectangular shape of specified length and width.

3. The method according to claim 2, wherein the estimated pick point is computed using a grasp neural network based on the one or more images to determine an optimal grasping location on the object mask for a single gripping element.

4. The method according to any of claims 1 to 3, wherein the object mask is produced by:
computing one or more instance segmentation masks detecting the one or more objects in the scene based on the one or more images, wherein each instance segmentation mask comprises a set of pixels that denote a particular object,
using the one or more instance segmentation masks for segmenting a depth map of the scene obtained from the one or more images, to therefrom produce a point cloud representation of the selected object.

5. The method according to any of claims 1 to 4, wherein the scene includes multiple objects, and wherein the method comprises selecting the object, from the multiple objects, by determining a pickability measure of the object masks corresponding to each of the multiple objects to ensure that the selected object to be picked is not occluded.

6. The method according to any of claims 2 to 5, wherein the number or reach of the neighboring points around the pick point in the object mask is determined based on a dimension of a single gripping element.

7. The method according to any of claims 1 to 6, wherein the set of points that are reprojected are obtained by removing points in the object mask that do not belong to the pick surface based on a clustering method.

8. The method according to any of claims 1 to 7, wherein creating the planar representation of the pick surface comprises:
projecting the set of points in the object mask into a depth map, and
rotating the points in the depth map with respect to the normal of the pick surface to produce a 2D image with a viewing direction perpendicular to the pick surface.

9. The method according to claim 8, wherein creating the planar representation of the pick surface further comprises processing the 2D image to generate a contour representing an outline of the pick surface.

10. The method according to claim 9, wherein the contour is generated from the reprojected points by infilling, or inpainting, or opening operation, or combinations thereof.

11. The method according to any of claims 9 and 10, wherein creating the planar representation of the pick surface further comprises fitting a primitive shape of minimum area that includes all points in the contour and therefrom estimating planar dimensions of the pick surface.

12. The method according to any of claims 1 to 11, comprising outputting the estimated pick pose to the controller subject to determining a complete overlap between the aligned end effector model and the planar representation of the pick surface.

13. The method according to any of claims 1 to 12, wherein the pick pose outputted to the controller is defined by: position coordinates defining a center of the end effector determined based on said alignment of the end effector model, a normal vector of the pick surface and the yaw-orientation defining an angular orientation of the end effector in the plane of the pick surface.

14. A non-transitory computer-readable storage medium including instructions that, when processed by one or more processors, configure the one or more processors to perform the method according to any one of claims 1 to 13.

15. An autonomous system for robotic picking, comprising:
an imaging system configured to acquire one or more images of a scene, the scene including one or more objects,
a robot comprising an end effector controllable by a controller,
one or more processors, and
memory storing instructions executable by the one or more processors to:
estimate a pick point on an object mask, the object mask produced by performing instance segmentation based on the one or more images, the object mask corresponding to an object, from the one or more objects, selected to be picked by the end effector of the robot,
estimate a pick pose for the end effector, wherein the end effector is modeled as a 2D shape with specified dimensions, comprising:
determine a pick surface utilizing neighboring points around the pick point in the object mask,
reproject a set of points in the object mask, which define an extent of the pick surface, with respect to a normal of the pick surface, to create a planar representation of the pick surface, and
compute a yaw-orientation based on alignment of a longer dimension of the end effector model with a longer dimension of the planar representation of the pick surface, and
output the estimated pick pose to the controller to control the end effector to pick the selected object.
